# EUROPEAN PATENT APPLICATION

(11) **EP 4 679 548 A1**
(43) Date of publication of application: **14.01.2026**
(21) Application number: 25187106.7
(22) Date of filing: 03.07.2025
(51) Int. Cl.: H01M 10/04, H01M 10/0585, H01M 50/474, H01M 50/14, H01M 10/0525

(54) **SECONDARY BATTERY AND METHOD OF MANUFACTURING THE SAME**

(30) Priority: 04.07.2024 KR 20240088198
(71) Applicant: SAMSUNG SDI CO., LTD., Yongin-si, Gyeonggi-do 17084 (KR)
(72) Inventor: BYEON, Junho, 17084 Yongin-Si Gyeonggi-do (KR)
(74) Representative: Gulde & Partner

(57) **Abstract**

A secondary battery may include an electrode assembly including a first electrode, a second electrode, and a separator, a case accommodating the electrode assembly, and an insulating portion on an upper surface and a lower surface of the electrode assembly, the insulating portion insulating the case and the electrode assembly from each other.

## Description

### BACKGROUND

### 1. Field

Embodiments of the present disclosure described herein are related to a secondary battery and a method of manufacturing the secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The case that accommodates the electrode assembly may be manufactured from a metal material such as aluminum. In this case, the electrode plate arranged at the outermost side of the electrode assembly may come into contact with the metal case, and may cause an internal short circuit. The internal short circuit may cause corrosion of the electrode plate.

The above information disclosed in this Background section is for enhancement of understanding of the background of the present disclosure, and therefore, it may contain information that does not constitute related (or prior) art.

### SUMMARY

The technical problem to be solved by the present disclosure may include a secondary battery capable of insulating between an electrode assembly and a case and a method of manufacturing the secondary battery.

The technical problems to be solved by the present disclosure are not limited to those described above, and other technical problems that are not mentioned herein will be clearly understood from the following description by those of ordinary skill in the art.

According to one or more embodiments of the present disclosure, a secondary battery may include an electrode assembly including a first electrode, a second electrode, and a separator, a case (e.g. configured to accommodate) accommodating the electrode assembly, and an insulating portion on (e.g., provided on, disposed on) an upper surface and a lower surface of the electrode assembly, the insulating portion configured to insulate (e.g. insulating) the case and the electrode assembly from each other.

In some embodiments, the electrode assembly may include a center electrode portion including (e.g. alternately) stacked first electrodes, separators, and second electrodes (e.g. with one of the separators stacked between one of the first electrodes and one of the second electrodes), and a pair of outer electrode portions on an upper surface and a lower surface of the center electrode portion, the insulating portion may be on (e.g., may be provided on, disposed on) an opposite surface of the surface of the outer electrode portion facing the center electrode portion. In other words, the insulating portion may be on (e.g., may be provided on, disposed on) a surface of the outer electrode portion facing away from the center electrode portion (e.g. the peripheral surface of the outer electrode portion facing the case).

In some embodiments, the outer electrode portion may include a substrate having (e.g. including) an electrode tab protruding outward from one side, and an active material layer on (e.g., formed on, disposed on) at least a portion of an area excluding (e.g., not including) the electrode tab on one surface (e.g. first surface) of the substrate, the insulating portion may be on (e.g., may be provided on, disposed on) at least a portion of the area excluding (e.g., not including) the electrode tab on the other surface of the substrate (e.g. a second surface of the substrate opposite to the first surface).

In some embodiments, the insulating portion comprises an insulating material stacked on the outer electrode portion, or an insulating film attached on the outer electrode portion.

In some embodiments, the outer electrode portion may include a metal layer comprising an electrode tab protruding outward from one side, an insulating film layer including (e.g., formed of) an insulating material and on (e.g., formed on, disposed on) an entire portion of one surface of the metal layer and the electrode tab (e.g. a first surface of the metal layer and the electrode tab), an active material layer on (e.g., formed on, disposed on) an opposite surface of the one surface of the metal layer (e.g. a second surface the metal layer opposite to the first surface), and an electrode tab metal layer only on (e.g., formed only on) an area of the other surface of the insulating film layer corresponding to the electrode tab, an area of the other surface of the insulating film layer where the electrode tab metal layer is not located is the insulating portion. In other words, the outer electrode portion may include an electrode tab metal layer directly disposed on the electrode tab (only), wherein the electrode tab metal layer is disposed on a surface of the electrode tab, which is opposite to the surface coated with the insulating film layer.

In some embodiments, the outer electrode portion may comprise a substrate having (e.g. including) an electrode tab protruding outward from one side of the substrate; and an active material layer on (e.g. disposed on) at least a portion of an area excluding the electrode tab on a first surface of the substrate, wherein the insulating portion is disposed on at least a portion of the area excluding the electrode tab on a second surface of the substrate opposite to the first surface.

In some embodiments, the case may include a case body having an opening at one side and the case body being configured to accommodate (e.g. accommodating) the electrode assembly, and a case cover coupled to the one side of the case body (having the opening), the secondary battery may further include an auxiliary insulating portion on (e.g., formed on) an inner surface of at least one of the case body or the case cover.

According to one or more embodiments of the present disclosure, a method of manufacturing a secondary battery, the method may include forming a center electrode portion by (alternately) stacking first electrodes, separators, and second electrodes. In particular, alternately stacking first electrodes and second electrodes with one of a plurality of separators stacked between one of the first electrodes and one of the second electrodes. Then, forming a pair of outer electrode portions each having (e.g. including) an insulating portion, stacking one of the pair of outer electrode portions on an upper surface of the center electrode portion and one of the pair of outer electrode portions on a lower surface of the center electrode portion, respectively, to form an electrode assembly, wherein the insulating portion may be on (e.g., may be provided on, disposed on) an opposite surface of the surface of the outer electrode portion facing the center electrode portion. In other words, each of the insulating portions is disposed on a surface of the outer electrode portion facing away from the center electrode portion. Further, the method comprises accommodating the electrode assembly in a case.

In some embodiments, the forming of the pair of outer electrode portions having the insulation portion may include: forming the insulating portion by applying an insulating material to one surface of a substrate with the substrate including (e.g., formed of) a metal material, or attaching an insulating film to one surface of a substrate, forming an electrode plate by forming an active material layer in an area of the other surface of the substrate corresponding to an area where the insulating portion may be formed, forming a first electrode plate and a second electrode plate by cutting the electrode plate, and forming a first outer electrode portion and a second outer electrode portion by punching the first electrode plate and the second electrode plate.

In some embodiments, the forming of the first outer electrode portion and the second outer electrode portion may include punching the first electrode plate and the second electrode plate such that electrode tabs may be in (e.g., may be formed in) an area where the insulating portion and the active material layer may not be formed.

In some embodiments, the forming of the first outer electrode portion and the second outer electrode portion may include punching while the pair of outer electrode portions may be stacked on the electrode assembly, such that an electrode tab of the first electrode plate and an electrode tab of the second electrode plate formed during punching may face each other.

In some embodiments, the forming of the first outer electrode portion and the second outer electrode portion may include forming a first outer electrode portion by punching the first electrode plate with a surface on which the insulating portion may be formed, and forming a second outer electrode portion by punching the second electrode plate with a surface on which the active material layer may be formed.

In some embodiments, the forming of the pair of outer electrode portions having the insulation portion may include forming an electrode plate by forming an active material layer on one surface of a substrate including (e.g., formed of) a metal material, forming a first electrode plate and a second electrode plate by cutting the electrode plate, forming a first outer electrode portion and a second outer electrode portion by punching the first electrode plate and the second electrode plate, and forming the insulating portion by applying an insulating material or by attaching an insulating file to one surface of the first outer electrode portion and the second outer electrode portion where the active material layer may not be formed.

In some embodiments, the forming of the first outer electrode portion and the second outer electrode portion may include punching the first electrode plate and the second electrode plate so that electrode tabs may be in (e.g., may be formed in) an area where the active material layer may not be formed.

In some embodiments, the forming of the first outer electrode portion and the second outer electrode portion may include forming a first outer electrode portion by punching the first electrode plate with a surface on which the active material layer may not be formed, and forming a second outer electrode portion by punching the second electrode plate with a surface on which the active material layer may be formed.

In some embodiments, the forming of the pair of outer electrode portions having the insulation portion may include forming an electrode plate by forming an active material layer on one surface of a substrate with the substrate including (e.g., formed of) a metal material, forming a first electrode plate and a second electrode plate by cutting the electrode plate, forming the insulating portion by applying an insulating material to an area of the other surface of the first electrode plate and the second electrode plate corresponding to an area where the active material layer may be formed or attaching an insulating film thereto, and forming a first outer electrode portion and a second outer electrode portion by punching the first electrode plate and the second electrode plate.

In some embodiments, the forming of the pair of outer electrode portions having the insulating portion may include forming an electrode tab metal layer by applying a metal material to one area on opposite ends of one surface of an insulating film layer with the insulating film layer including (e.g., formed of) an insulating material, forming a metal layer by applying a metal material to the entire other surface of the insulating film layer, forming an electrode plate by forming an active material layer by applying an active material to at least a portion of an area excluding (e.g., not including) an area of the metal layer corresponding to an area where the electrode tab metal layer may be formed, forming a first electrode plate and a second electrode plate by cutting the electrode plate, and forming a first outer electrode portion and a second outer electrode portion by punching the first electrode plate and the second electrode plate.

In some embodiments, the forming of the first outer electrode portion and the second outer electrode portion may include punching the first electrode plate and the second electrode plate such that electrode tabs may be in (e.g., may be formed in) an area where the active material layer may not be formed.

In some embodiments, the forming of the first outer electrode portion and the second outer electrode portion may include punching while the pair of outer electrode portions may be stacked on the electrode assembly, such that an electrode tab of the first electrode plate and an electrode tab of the second electrode plate formed during punching may face each other.

In some embodiments, the forming the first outer electrode portion and the second outer electrode portion may include forming a first outer electrode portion by punching the first electrode plate with a surface on which the electrode tab metal layer may be formed, and forming a second outer electrode portion by punching the second electrode plate with a surface on which the active material layer may be formed.

In some embodiments, the method may further comprise providing the case, which may include a case body having an opening at one side and accommodating the electrode assembly, and a case cover coupled to the one side of the case body having the opening, and the method may further include forming an auxiliary insulating portion on an inner surface of at least one of the case body or the case cover.

According to some embodiments of the present disclosure, the insulating portions may be on (e.g., may be provided on) opposite surfaces of the electrode assembly to prevent a short circuit between the case and the electrode assembly.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates an exploded perspective view showing an example of a secondary battery according to some embodiments of the present disclosure.
FIG. 2 illustrates a cross-sectional view showing an example taken along line A-A of FIG. 1.
FIG. 3 illustrates a cross-sectional view showing an example of an electrode assembly according to some embodiments of the present disclosure.
FIG. 4 illustrates an exploded perspective view showing another example of a case in a secondary battery according to some embodiments of the present disclosure.
FIG. 5 illustrates a cross-sectional view showing an example taken along line B-B of FIG. 4.
FIG. 6 sequentially illustrates an example of forming an outer electrode portion according to one or more embodiments of the present disclosure.
FIG. 7 sequentially illustrates an example of forming an outer electrode portion according to one or more embodiments of the present disclosure following FIG. 6.
FIG. 8 sequentially illustrates an example of forming an outer electrode portion according to one or more embodiments of the present disclosure.
FIG. 9 sequentially illustrates an example of forming an outer electrode portion according to one or more embodiments of the present disclosure following FIG. 8.
FIG. 10 sequentially illustrates an example of forming an outer electrode portion according to one or more embodiments of the present disclosure following FIG. 8.
FIG. 11 sequentially illustrates an example of forming an outer electrode portion according to one or more embodiments of the present disclosure following FIG. 8.
FIG. 12 sequentially illustrates an example of forming an outer electrode portion according to one or more embodiments of the present disclosure following FIG. 8.
FIG. 13 sequentially illustrates an example of forming an outer electrode portion according to one or more embodiments of the present disclosure.
FIG. 14 sequentially illustrates an example of forming an outer electrode portion according to one or more embodiments of the present disclosure following FIG. 13.
FIG. 15 illustrates a flowchart showing an example of a method of manufacturing a secondary battery according to some embodiments of the present disclosure.
FIG. 16 illustrates a flowchart showing an example of a method of manufacturing the outer electrode portion according to one or more embodiments of the present disclosure.
FIG. 17 illustrates a flowchart showing an example of a method of manufacturing the outer electrode portion according to one or more embodiments of the present disclosure.
FIG. 18 illustrates a flowchart showing an example of a method of manufacturing the outer electrode portion according to one or more embodiments of the present disclosure.
FIG. 19 is a flowchart showing an example of a method of manufacturing the outer electrode portion according to one or more embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element. For instance, the upper (or lower) surface an element (e.g. of the center electrode portion) refers to the (two) outmost surfaces in a stacking direction, which are in parallel to the contact surfaces of the stack of elements.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In secondary batteries according to embodiments of the present disclosure, prismatic batteries will be mainly described, but the present disclosure may be applied to other types of batteries, such as pouch-type batteries.

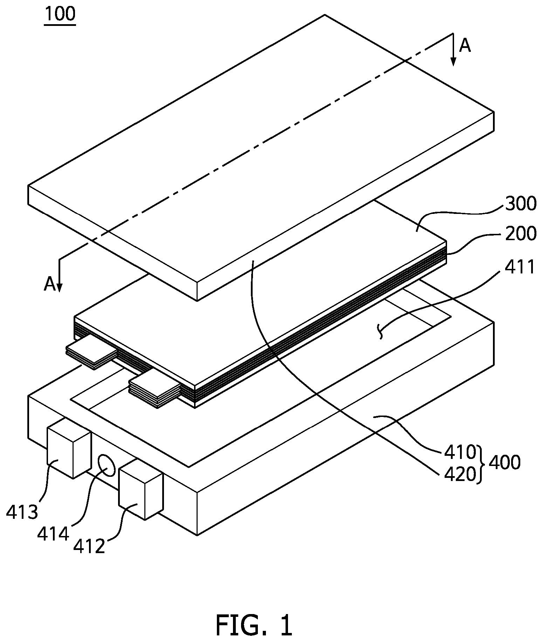

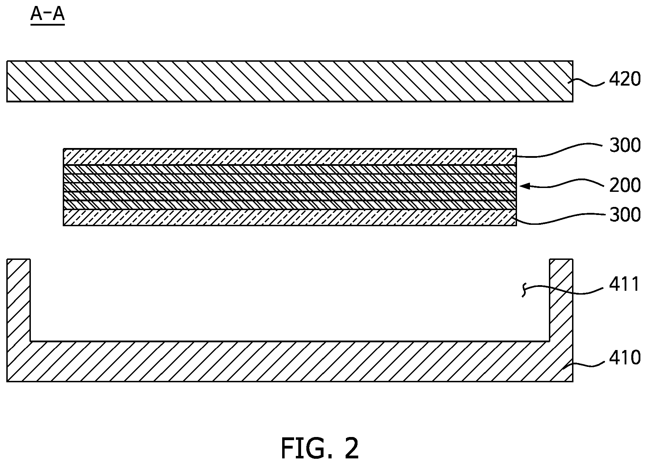

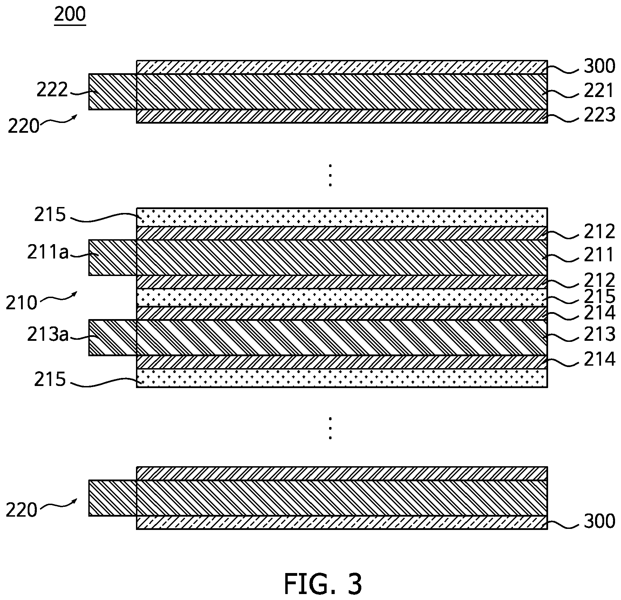

FIG. 1 illustrates an exploded perspective view showing an example of a secondary battery according to some embodiments of the present disclosure, FIG. 2 illustrates a cross-sectional view showing an example taken along line A-A of FIG. 1, and FIG. 3 illustrates a cross-sectional view showing an example of an electrode assembly according to some embodiments of the present disclosure.

Referring to FIGS. 1 to 3, a secondary battery 100 according to some embodiments of the present disclosure may include an electrode assembly 200 including a plurality of first electrodes 211 and a plurality of second electrodes 213, a case 400 that accommodates the electrode assembly 200, and insulating portions 300 provided on the upper and lower surfaces of the electrode assembly 200 to insulate the case 400 and the electrode assembly 200 from each other. The insulating portion 300 may include (e.g., may be formed of) an insulating material such as polymer, resin, rubber, and/or the like, which may be a high molecular weight compound through which electricity may not be transmitted.

The case 400 forms the overall appearance of the secondary battery. According to some embodiments, the case 400 may include (e.g., may be formed of) stainless steel (SUS). In one or more embodiments, the case 400 may include (e.g., may be formed of) a conductive metal, such as aluminum, an aluminum alloy, or nickel-plated steel. In addition, the case 400 may provide a space in which the electrode assembly 200 may be accommodated.

The case 400 according to some embodiments may include a case body 410 having one side open and having an electrode assembly accommodation groove 411 formed so that the electrode assembly 200 may be accommodated therein, and a case cover 420 that may be fastened to the open side of the case body 410 to seal the open side of the case body 410. In one or more embodiments, the side of the case body 410 having the electrode assembly accommodation groove 411 may face the case cover 420 when the case body 410 is fastened to the case cover 420.

The case body 410 and the case cover 420 may be joined by welding. In some embodiments, a flange area may be formed at the edge of the case body 410, a portion where the flange area and the case cover 420 come into contact with each other may be sealed by welding or the like, and then the flange area may be removed to join the case body 410 to the case cover 420.

The case 400 may include a first electrode terminal 412 on one side, a second electrode terminal 413 spaced apart from the first electrode terminal 412 by a certain interval, and a through-hole 414. The first electrode terminal 412 and the second electrode terminal 413 may be electrically connected to and in contact with a first electrode tab 211a and a second electrode tab 213a provided in the electrode assembly 200, respectively. The through-hole 414 may serve as a passage for relatively smooth impregnation of an electrolyte injected into the case 400. The through-hole 414 may be formed between the first electrode terminal 412 and the second electrode terminal 413, but the present disclosure may not be limited thereto.

The electrode assembly 200 may be formed by alternately stacking a plurality of first electrodes, separators, and second electrodes formed in a thin plate shape or a film shape. In the electrode assembly 200, the first electrode may serve as a negative electrode and the second electrode may serve as a positive electrode. In one or more embodiments, the opposite may be also possible. For example, the first electrode may serve as a positive electrode and the second electrode may serve as a negative electrode.

Referring to FIG. 3, the electrode assembly 200 according to some embodiments may include a center electrode portion 210 in which the first electrodes 211, separators 215, and second electrode 213 may be alternately stacked, and a pair of outer electrode portions 220 on the upper and lower surfaces of the center electrode portion 210 (e.g., opposite surfaces of the center electrode portion 210). For example, the center electrode portion 210 may include first electrodes 211, separators 215, and second electrode 213 alternately stacked. The insulating portion 300 may be provided on the opposite surface of one surface of the outer electrode portion 220 that faces the center electrode portion 210. The insulating portions 300 may be provided on the outermost upper and lower surfaces of the electrode assembly 200 and may be located between the case 400 and the electrode assembly 200 in a case where the electrode assembly 200 may be accommodated in the case 400, thereby insulating the case 400 and the electrode assembly 200 from each other.

The first electrode plate 211 may be formed by applying a first electrode active material, such as graphite or carbon, to a first electrode current collector formed of a metal foil, such as copper, a copper alloy, nickel, or a nickel alloy. The first electrode plate 211 may include a first electrode tab 211a (e.g., a first uncoated portion) that may be a region to which the first electrode active material may not be applied. The first electrode tab 211a may act as a current flow path between the first electrode plate 211 and the first current collector. In some embodiments, when the first electrode plate 211 may be manufactured, the first electrode tab 211a may be formed by being cut in advance to protrude to one side of the electrode assembly 200, or the first electrode tab 211a may protrude to one side of the electrode assembly 200 more than (e.g., farther than or beyond) the separator 215 without being separately cut. The first electrode tab 211a may be a passage for current flow between the first electrode 211 and the first electrode terminal 412 formed on the case body 410.

The second electrode plate 213 may be formed by applying a second electrode active material, such as a transition metal oxide, on a second electrode current collector formed of a metal foil, such as aluminum or an aluminum alloy. The second electrode plate 213 may include a second electrode tab 213a (e.g., a second uncoated portion) that may be a region to which the second electrode active material may not be applied. The second electrode tab 213a may act as a current flow path between the second electrode plate 213 and the second current collector. In some embodiments, the second electrode tab 213a may be formed by being cut in advance to protrude to the other side (e.g., the opposite side) of the electrode assembly 200 when the second electrode plate 213 may be manufactured, or the second electrode plate 213 may protrude to the other side of the electrode assembly 200 more than (e.g., farther than or beyond) the separator 215 without being separately cut. The second electrode tab 213a may be a passage for current flow between the second electrode 213 and the second electrode terminal 413 formed on the case body 410.

The first electrode tab 211a of the first electrode plate 211 and the second electrode tab 213a of the second electrode plate 213 may be respectively positioned at both ends (e.g., opposite ends) of the electrode assembly 200. In some embodiments, the electrode assembly 200 may be accommodated in the case 400 along with an electrolyte. In addition, in the electrode assembly 200, the first current collector and the second current collector may be welded and connected to the first electrode tab 211a of the first electrode plate 211 and the second electrode tab 213a of the second electrode plate 213 exposed on both sides, respectively, to then be positioned thereat, respectively. The first electrode tab 211a and the second electrode tab 213a may be electrically connected to and in contact with the first electrode terminal 412 and the second electrode terminal 413 provided in the case 400, respectively, while the electrode assembly 200 may be accommodated in the case 400. In one or more embodiments, in FIG. 1, the first electrode tab 211a and the second electrode tab 213a may be configured (e.g., may be formed) to protrude in the same direction, but the first electrode tab and the second electrode tab may be configured to (e.g., may be formed to) protrude in different directions.

The separator 215 prevents a short circuit between the first electrode 211 and the second electrode 213 while allowing movement of lithium ions therebetween. The separator 215 may be made of, for example, a polyethylene film, a polypropylene film, a polyethylene-polypropylene film, or the like.

The outer electrode portion 220 may include a substrate 221 including (e.g., formed of) a metal material and having electrode tabs configured to (e.g., formed to) protrude outward from one side, and an active material layer 223 formed on at least a portion of an area excluding (e.g., not including) the electrode tabs on one surface of the substrate 221.

The substrate 221 according to some embodiments may include an electrode current collector plate including (e.g., formed of) a metal foil such as copper, a copper alloy, nickel, or a nickel alloy. At this time, the active material layer 223 may be formed by applying an active material such as graphite or carbon to one surface of the substrate 221. At this time, the substrate 221 may form the same electrode as the first electrode 211, and the electrode tab of the substrate 221 may be electrically connected to the first electrode tab 211a so that the electrode assembly 200 may be electrically connected to and in contact with the first electrode terminal 412 provided in the case 400 while being accommodated in the case 400.

In one or more embodiments, the substrate 221 may include an electrode current collector plate including (e.g., formed of) a metal foil such as aluminum or an aluminum alloy. At this time, the active material layer 223 may be formed by applying an active material such as a transition metal oxide to one surface of the substrate 221. At this time, the substrate 221 may form the same electrode as the second electrode 213, and the electrode tab of the substrate 221 may be electrically connected to the second electrode tab 213a so that the electrode assembly 200 may be electrically connected to and in contact with the second electrode terminal 413 provided in the case 400 while being accommodated in the case 400.

The insulating portion 300 may be provided in at least a portion of an area excluding (e.g., not including) the electrode tab on the other surface of the substrate 221 where the active material layer 223 may not be formed. At this time, the insulating portions 300 may be configured to (e.g., formed to) face each other in the same area as the active material layer 223 with the substrate 221 therebetween.

The insulating portion 300 according to some embodiments may be stacked by applying an insulating material to the outer electrode portion 220. In one or more embodiments, the insulating portion 300 may be formed by attaching an insulating film manufactured in a film form to the outer electrode portion 220. This insulating portion 300 may be configured to (e.g., formed to) have a thickness of 10 µm to 100 µm to maintain insulation performance.

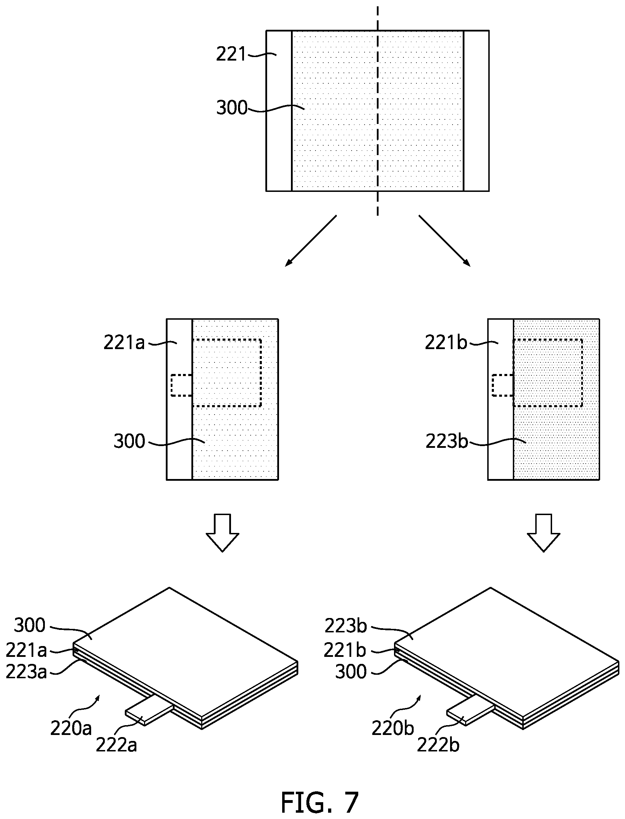

The outer electrode portions 220 may be provided as a pair and may be stacked on the upper and lower surfaces of the center electrode portion 210. To this end, referring to FIG. 7, the outer electrode portion 220 may be manufactured as a first outer electrode portion 220a and a second outer electrode portion 220b. An insulating portion 300 may be formed on the upper surface of the first substrate 221a and a first active material layer 223a may be formed on the lower surface thereof, and thus, the first outer electrode portion 220a may be stacked on the upper surface of the center electrode portion 210. A second active material layer 223b may be formed on the upper surface of the second substrate 221b and an insulating portion 300 may be formed on the lower surface thereof, and thus, the second outer electrode portion 220b may be stacked on the lower surface of the center electrode portion 210. At this time, an electrode tab 222a protruding (e.g., being protruded) from one side of the first substrate 221a and an electrode tab 222b protruding (e.g., being protruded) from one side of the second substrate 221b may be formed in directions facing each other.

The electrode tab 222a of the first substrate 221a and the electrode tab 222b of the second substrate 221b may be respectively above and below the first electrode tab 211a formed on the first electrode 211 of the center electrode portion 210 and may be electrically connected to the first electrode tab 211a. In one or more embodiments, the electrode tab 222a of the first substrate 221a and the electrode tab 222b of the second substrate 221b may be respectively above and below the second electrode tab 213a formed on the second electrode 213 and may be electrically connected to the second electrode tab 213a.

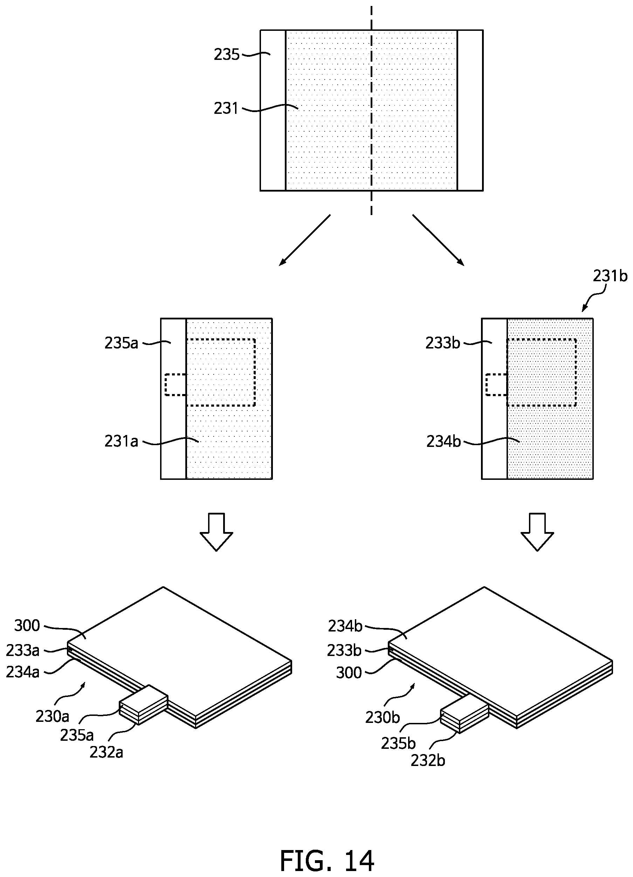

Referring to FIG. 14, an outer electrode portion according to one or more embodiments may include metal layers 233a and 233b having electrode tabs 232a and 232b protruding (e.g., being protruded) outward from one side, an insulating film layer 231 including (e.g., formed of) an insulating material and formed on one entire surface of the metal layers 233a and 233b and on the electrode tabs 232a and 232b, active material layers 234a and 234b formed on the opposite surface of one surface of the metal layers 233a and 233b, and electrode tab metal layers 235a and 235b formed only on an area corresponding to the electrode tabs on the other surface of the insulating film layer 231. An area where the electrode tab metal layers 235a and 235b may not be formed on the other surface of the insulating film layer 231 forms the insulating portion 300. In one or more embodiments, the insulating portion 300 may include an area of the insulating film layer 231 that does not include electrode tab metal layers 235a and 235b.

The outer electrode portion according to one or more embodiments may be used as an electrode by applying a metal material to one surface of the insulating film layer including (e.g., formed of) an insulating material to form a metal layer and coating an active material layer on the metal layer. Because the other surface of the insulating film layer does not may have a metal layer formed thereon, the other surface of the insulating film layer forms an insulating portion.

The outer electrode portions according to one or more embodiments may be also provided as a pair and may be stacked on the upper and lower surfaces of the center electrode portion 210. For example, referring to FIG. 14, the outer electrode portion may be manufactured as a first outer electrode portion 230a and as a second outer electrode portion 230b. The first outer electrode portion 230a may be provided with the first metal layer 233a and the first active material layer 234a formed on the lower surface of the first insulating film layer 231a and may be stacked on the upper surface of the center electrode portion. The second outer electrode portion 230b may be provided with the second metal layer 233b and the second active material layer 234b formed on the upper surface of the second insulating film layer 231b and may be stacked on the lower surface of the center electrode portion. At this time, the electrode tab 232a protruding (e.g., being protruded) from one side of the first metal layer 233a and the electrode tab 232b protruding (e.g., being protruded) from one side of the second metal layer 233b may be formed in directions facing each other.

The electrode tab 232a of the first metal layer 233a and the electrode tab 232b of the second metal layer 233b may be respectively above and below the first electrode tab 211a formed on the first electrode 211 of the center electrode portion 210 and may be electrically connected to the first electrode tab 211a. In one or more embodiments, the electrode tab 232a of the first metal layer 233a and the electrode tab 232b of the second metal layer 233b may be respectively above and below the second electrode tab 213a formed on the second electrode 213 and may be electrically connected to the second electrode tab 213a.

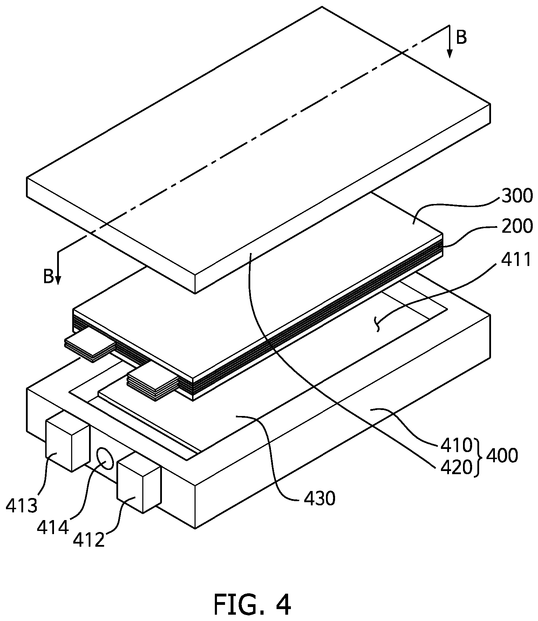

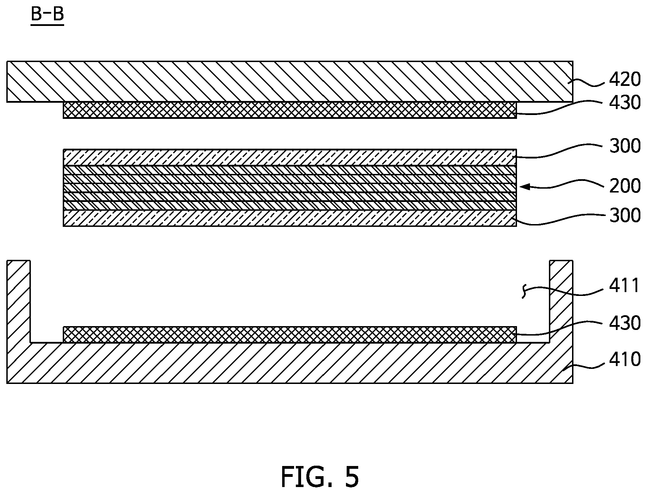

FIG. 4 illustrates an exploded perspective view showing another example of a case in a secondary battery according to some embodiments of the present disclosure, and FIG. 5 illustrates a cross-sectional view showing an example taken along line B-B of FIG. 4. Referring to FIGS. 4 and 5, the secondary battery according to some embodiments may further include an auxiliary insulating portion 430 formed on the inner surface of at least one of a case body 410 or a case cover 420.

The auxiliary insulating portion 430 may be formed only on the inner surface of the case body 410 or the inner surface of the case cover 420. In one or more embodiments, as illustrated in FIG. 5, the auxiliary insulating portion 430 may be formed on both the inner surface of the case body 410 and the inner surface of the case cover 420. The auxiliary insulating portion 430 may include (e.g., be formed of) an insulating material such as polymer, resin, rubber, and/or the like, which may be a high molecular weight compound through which electricity may not be transmitted.

This auxiliary insulating portion 430 may be in contact with the insulating portion 300 provided in the electrode assembly 200 while the electrode assembly 200 may be accommodated in the case 400, or may be spaced apart from the insulating portion 300 by a set or certain interval. As such, by further providing the auxiliary insulating portion 430, the insulation performance may be further improved.

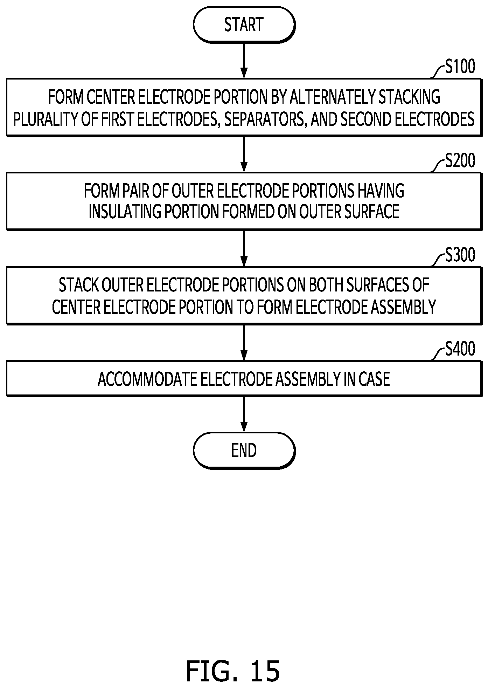

FIG. 15 illustrates a flowchart showing an example of a method of manufacturing a secondary battery according to some embodiments of the present disclosure. Referring to FIG. 15, a method of manufacturing a secondary battery according to some embodiments of the present disclosure may include forming a center electrode portion by alternately stacking a plurality of first electrodes, separators, and second electrodes (S100), forming a pair of outer electrode portions having an insulating portion (S200), stacking the pair of outer electrode portions on the upper and lower surfaces of the center electrode portion, respectively, to form an electrode assembly (S300), and accommodating the electrode assembly in a case (S400).

The forming of the center electrode portion by alternately stacking the plurality of first electrodes, separators, and second electrodes (S100) may include stacking a separator between the first electrode and the second electrode and stacking a separator on the outer surface of the first electrode or the second electrode at the outermost side. For example, the separators may be on the upper and lower surfaces of the center electrode portion and the first electrode, the separator, and the second electrode may be sequentially stacked therebetween.

The first electrode may be manufactured to include the first electrode tab formed to protrude to one side by punching or cutting an electrode current collector plate including (e.g., formed of) a metal foil such as copper, a copper alloy, nickel, or a nickel alloy. A first active material such as graphite or carbon may be applied to the upper and lower surfaces of the first electrode to form a first active material layer. At this time, the first active material may not be applied to the first electrode tab.

The second electrode may be manufactured to include a second electrode tab formed to protrude to one side by punching or cutting an electrode current collector plate including (e.g., formed of) a metal foil such as aluminum or an aluminum alloy. A second active material such as a transition metal oxide may be applied to the upper and lower surfaces of the second electrode 213 to form a second active material layer. At this time, the second active material may not be applied to the second electrode tab.

In the stacking of the pair of outer electrode portions on the upper and lower surfaces of the center electrode portion, respectively (S300), in a case of stacking the pair of outer electrode portions on the center electrode portion, the insulating portion provided on the outer electrode portion may be stacked so as to be on the opposite surface of one surface of the outer electrode portion facing the center electrode portion. In this manner, the insulating portions may be on the upper and lower surfaces of the electrode assembly so as to face the inner surface of the case, thereby insulating between the electrode assembly and the case.

In the forming of the pair of outer electrode portions having the insulating portion (S200), the pair of outer electrode portions may be manufactured in one or more embodiments. The respective embodiments may be described in more detail below with reference to the drawings.

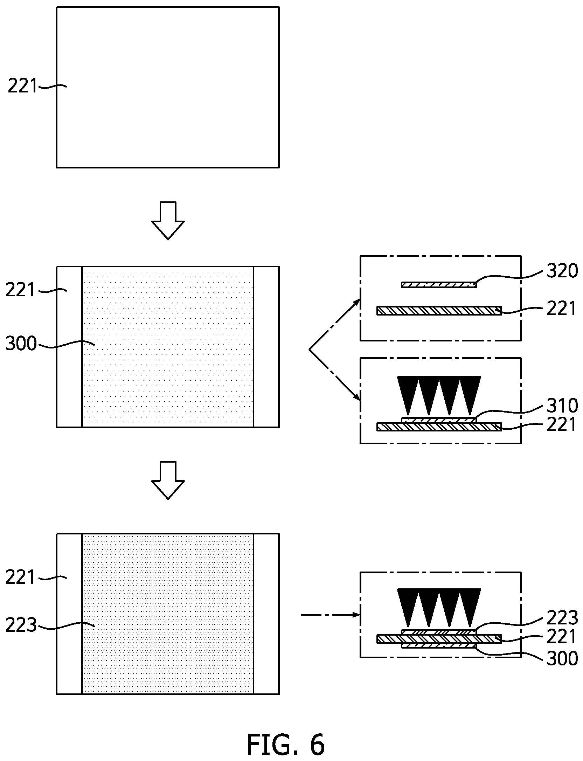

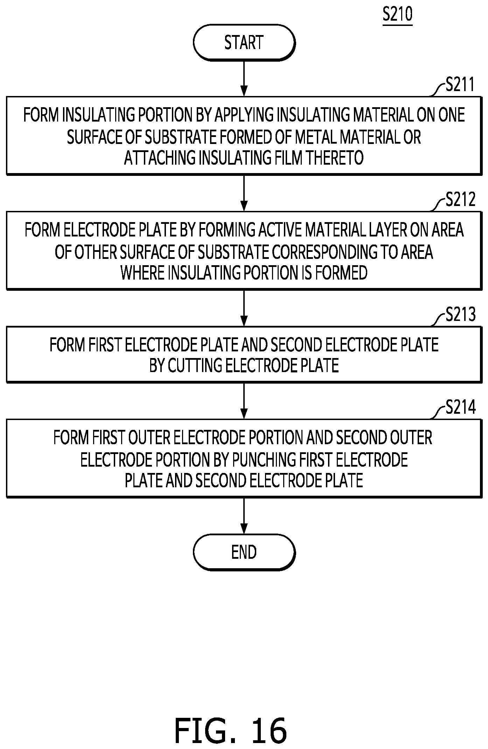

FIGS. 6 and 7 sequentially illustrate an example of forming an outer electrode portion according to one or more embodiments of the present disclosure, and FIG. 16 illustrates a flowchart showing an example of a method of manufacturing the outer electrode portion according to one or more embodiments of the present disclosure. Referring to FIGS. 6, 7, and 16, the forming of an outer electrode portion (S210) according to one or more embodiments may include forming an insulating portion 300 on one surface of a substrate 221 including (e.g., formed of) a metal material (S211), forming an electrode plate by forming an active material layer 223 by applying an active material to an area of the other surface of the substrate 221 corresponding to an area where the insulating portion 300 may be formed (S212), forming a first electrode plate 221a and a second electrode plate 221b by cutting the electrode plate (S213), and forming a first outer electrode portion 220a and a second outer electrode portion 220b by punching the first electrode plate 221a and the second electrode plate 221b (S214).

The forming of the insulating portion 300 on one surface of the substrate 221 including (e.g., formed of) the metal material (S211) may include forming the insulating portion 300 by applying an insulating material 310 to one surface of the substrate 221. In one or more embodiments, an insulating film 320 including (e.g., formed of) an insulating material may be attached to the substrate 221 to form the insulating portion 300.

In the forming of the insulating portion 300 on one surface of the substrate 221 including (e.g., formed of) the metal material (S211) and the forming of the electrode plate by forming the active material layer 223 by applying the active material to the area of the other surface of the substrate 221 corresponding to the area where the insulating portion 300 may be formed (S212), the insulating portion 300 and the active material layer 223 may be formed in the central area of the substrate 221 so that one area of opposite ends of the substrate 221 may be exposed to the outside. As such, the ends on opposite sides of the substrate 221 where the insulating portion 300 and the active material layer 223 may not be formed become an area where electrode tabs may be formed through the forming of the first outer electrode portion 220a and the second outer electrode portion 220b by punching the first electrode plate 221a and the second electrode plate 221b (S214).

Referring to FIG. 7, the forming of the first electrode plate 221a and a second electrode plate 221b by cutting the electrode plate (S213) may include forming the first electrode plate 221a and the second electrode plate 221b by cutting the center of the electrode plate in a direction parallel to the ends on opposite sides of the electrode plate where the insulating portion 300 and the active material layer 223 may not be formed.

The forming of the first outer electrode portion 220a and the second outer electrode portion 220b by punching the first electrode plate 221a and the second electrode plate 221b (S214) may include punching the first electrode plate 221a and the second electrode plate 221b so that electrode tabs may be formed in an area where the insulating portion 300 and the active material layer 223 may not be formed.

In the forming of the first outer electrode portion 220a and the second outer electrode portion 220b by punching the first electrode plate 221a and the second electrode plate 221b (S214), while the pair of outer electrode portions 220a and 220b may be stacked on the electrode assembly, the punching may be performed so that the electrode tab 222a of the first electrode plate 221a and the electrode tab 222b of the second electrode plate 221b formed during punching may face each other.

For example, referring to FIG. 7, the forming of the first outer electrode portion 220a and the second outer electrode portion 220b by punching the first electrode plate 221a and the second electrode plate 221b (S214) may include forming the first outer electrode portion 220a by punching the first electrode plate 221a with the surface on which the insulating portion 300 may be formed, and forming the second outer electrode portion 220b by punching the second electrode plate 221b with the surface on which the active material layer 223b may be formed. The forming of the first outer electrode portion 220a by punching the first electrode plate 221a with the surface on which the insulating portion 300 may be formed and the forming of the second outer electrode portion 220b by punching the second electrode plate 221b with the surface on which the active material layer 223b may be performed simultaneously, or the forming of the first outer electrode portion 220a by punching the first electrode plate 221a with the surface on which the insulating portion 300 may be formed may be performed after the forming of the second outer electrode portion 220b by punching the second electrode plate 221b with the surface on which the active material layer 223b.

In one or more embodiments, rather than performing the forming of the first outer electrode portion 220a by punching the first electrode plate 221a with the surface on which the insulating portion 300 may be formed and the forming of the second outer electrode portion 220b by punching the second electrode plate 221b with the surface on which the active material layer 223b separately, the first outer electrode portion 220a and the second outer electrode portion 220b may be manufactured simultaneously through single punching while the first electrode plate 221a and the second electrode plate 221b may be stacked. At this time, the insulating portion 300 formed on the first electrode plate 221a and the insulating portion 300 formed on the second electrode plate 221b may be punched while being stacked to face each other.

As such, the insulating portion 300 may be formed on the upper surface of the first electrode plate 221a and the first active material layer 223a may be formed on the lower surface thereof, and thus, the first outer electrode portion 220a formed through the forming of the outer electrode portion (S210) according to one or more embodiments may be stacked on the upper surface of the center electrode portion. The second active material layer 223b may be formed on the upper surface of the second electrode plate 221b and the insulating portion 300 may be formed on the lower surface thereof, and thus, the second outer electrode portion 220b may be stacked on the lower surface of the center electrode portion. At this time, the electrode tab 222a of the first outer electrode portion 220a and the electrode tab 222b of the second outer electrode portion 220b may face each other.

The electrode tab 222a of the first outer electrode portion 220a and the electrode tab 222b of the second outer electrode portion 220b may be respectively above and below the first electrode tab formed on the first electrode of the center electrode portion and may be electrically connected to the first electrode tab. In one or more embodiments, the electrode tab 222a of the first outer electrode portion 220a and the electrode tab 222b of the second outer electrode portion 220b may be above and below the second electrode tab formed on the second electrode and may be electrically connected to the second electrode tab.

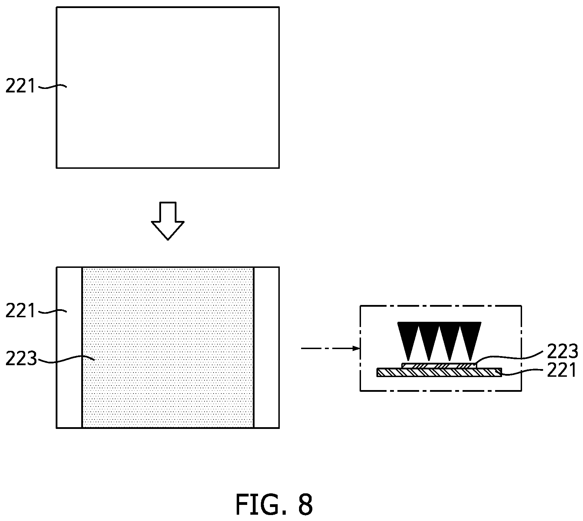

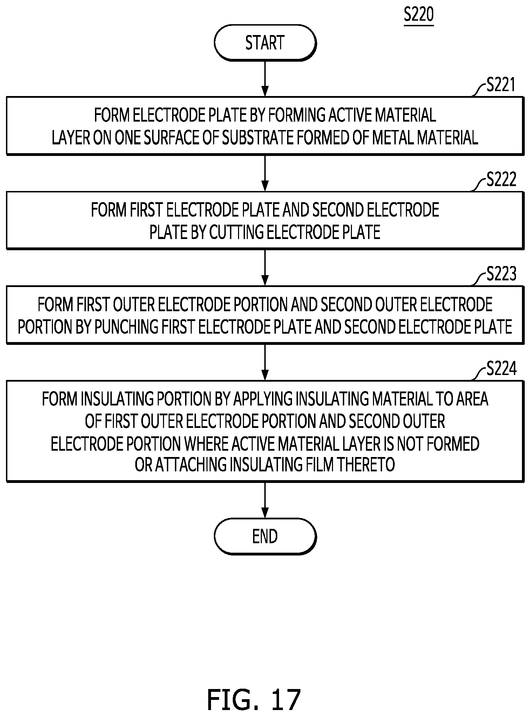

FIGS. 8 to 10 sequentially illustrate an example of forming an outer electrode portion according to one or more embodiments of the present disclosure, and FIG. 17 illustrates a flowchart showing an example of a method of manufacturing the outer electrode portion according one or more embodiments of the present disclosure. Referring to FIGS. 8 to 10 and 17, forming an outer electrode portion (S220) according to one or more embodiments may include forming an electrode plate by forming an active material layer 223 by applying an active material to one surface of a substrate 221 including (e.g., formed of) a metal material (S221), forming a first electrode plate 221a and a second electrode plate 221b by cutting the electrode plate (S222), forming a first outer electrode portion 220a and a second outer electrode portion 220b by punching the first electrode plate 221a and the second electrode plate 221b (S223), and forming an insulating portion 300 on one surface of the first outer electrode portion 220a and the second outer electrode portion 220b where the active material layer 223 may not be formed (S224).

The forming of the electrode plate by forming the active material layer 223 by applying the active material to one surface of the substrate 221 including (e.g., formed of) a metal material (S221) may include forming the electrode plate by forming the active material layer 223 in the central area of the substrate 221 so that one area on opposite ends of the substrate 221 may be exposed to the outside. As such, the ends on opposite sides of the substrate 221 where the active material layer 223 may not be formed become an area where electrode tabs may be formed through forming of the first outer electrode portion 220a and the second outer electrode portion 220b by punching the first electrode plate 221a and the second electrode plate 221b (S223).

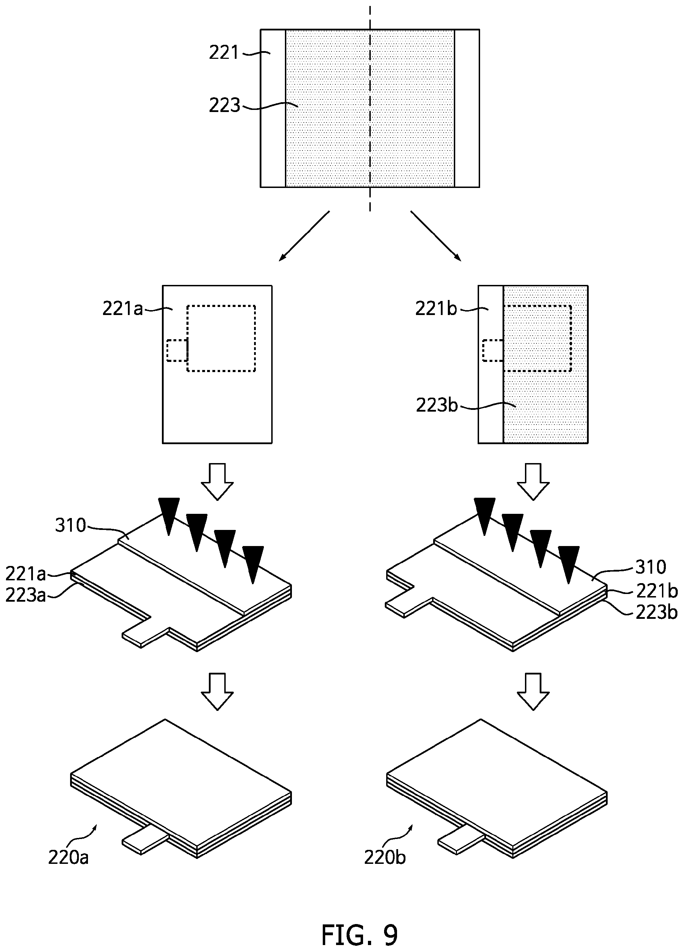

Referring to FIG. 9, the forming of the first electrode plate 221a and the second electrode plate 221b by cutting the electrode plate (S222) may include forming the first electrode plate 221a and the second electrode plate 221b by cutting the center of the electrode plate in a direction parallel to the ends on opposite sides of the electrode plate where the active material layer 223 may not be formed.

The forming of the first outer electrode portion 220a and the second outer electrode portion 220b by punching the first electrode plate 221a and the second electrode plate 221b (S223) may include punching the first electrode plate 221a and the second electrode plate 221b so that electrode tabs may be formed in an area where the active material layer 223 may not be formed.

In the forming of the first outer electrode portion 220a and the second outer electrode portion 220b by punching the first electrode plate 221a and the second electrode plate 221b (S223), while the pair of outer electrode portions 220a and 220b may be stacked on the electrode assembly, the punching may be performed so that the electrode tab 222a of the first electrode plate 221a and the electrode tab 222b of the second electrode plate 221b formed during punching may face each other.

For example, referring to FIG. 9, the forming of first outer electrode portion 220a and the second outer electrode portion 220b by punching the first electrode plate 221a and the second electrode plate 221b (S223)may include forming the first outer electrode portion 220a by punching the first electrode plate 221a with the surface on which the active material layer 223 may not be formed, and forming the second outer electrode portion 220b by punching the second electrode plate 221b with the surface on which the active material layer 223b may be formed. The forming the first outer electrode portion 220a by punching the first electrode plate 221a with the surface on which the active material layer 223 may not be formed and the forming the second outer electrode portion 220b by punching the second electrode plate 221b with the surface on which the active material layer 223b may be formed may be performed together (e.g., simultaneously), or the forming the first outer electrode portion 220a by punching the first electrode plate 221a with the surface on which the active material layer 223 may not be formed may be performed after the forming the second outer electrode portion 220b by punching the second electrode plate 221b with the surface on which the active material layer 223b may be formed.

In one or more embodiments, rather than performing forming the first outer electrode portion 220a by punching the first electrode plate 221a with the surface on which the active material layer 223 may not be formed and the forming the second outer electrode portion 220b by punching the second electrode plate 221b with the surface on which the active material layer 223b may be formed separately, the first outer electrode portion 220a and the second outer electrode portion 220b may be manufactured simultaneously through single punching while the first electrode plate 221a and the second electrode plate 221b may be stacked. At this time, the first electrode plate 221a and the second electrode plate 221b may be punched in a stacked state so that the surfaces on which the active material layer may not be formed face each other. For example, the first electrode plate 221a and the second electrode plate 221b may be punched in a stacked state so that the surfaces that do not include the active material may face each other.

The forming of the insulating portion 300 on one surface of the first outer electrode portion 220a and the second outer electrode portion 220b where the active material layer 223 may not be formed (S224)may include forming the insulating portion 300 on one surface of the first outer electrode portion 220a and the second outer electrode portion 220b, formed through the forming of the first outer electrode portion 220a and the second outer electrode portion 220b by punching the first electrode plate 221a and the second electrode plate 221b (S223), where the active material layer 223 may not be formed.

As illustrated in FIG. 9, the insulating portion 300 may be formed by applying an insulating material 310 to one surface of the first electrode plate 221a and the second electrode plate 221b. At this time, the insulating material 310 may not be applied to the electrode tab.

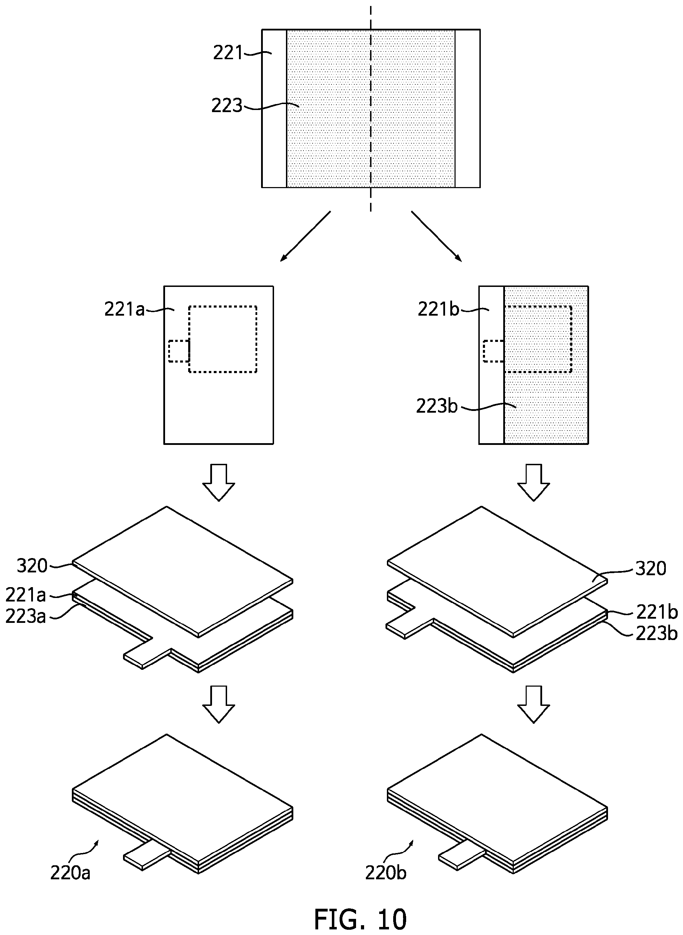

In one or more embodiments, as illustrated in FIG. 10, the insulating portion 300 may be formed by attaching an insulating film 320 including (e.g., formed of) an insulating material to one surface of the first electrode plate 221a and the second electrode plate 221b. At this time, the insulating film 320 may not be attached to the electrode tab.

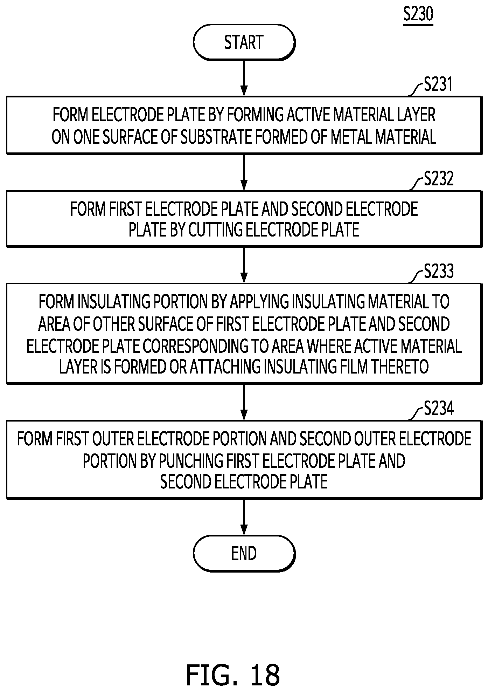

FIGS. 8, 11, and 12 sequentially illustrate an example of forming an outer electrode portion according to one or more embodiments of the present disclosure, and FIG. 18 illustrates a flowchart showing an example of a method of manufacturing the outer electrode portion according to one or more embodiments of the present disclosure. Referring to FIGS. 8, 11, 12, and 18, forming an outer electrode portion (S230) according to one or more embodiments may include forming an electrode plate by forming an active material layer 223 by applying an active material to one surface of a substrate 221 including (e.g., formed of) a metal material (S231), forming a first electrode plate 221a and a second electrode plate 221b by cutting the electrode plate (S232), forming an insulating portion 300 in an area of the other surface of the first electrode plate 221a and the second electrode plate 221b corresponding to an area where the active material layer 223 may be formed (S233), and forming a first outer electrode portion 220a and a second outer electrode portion 220b by punching the first electrode plate 221a and the second electrode plate 221b (S234).

The forming of the electrode plate by forming the active material layer 223 by applying the active material to one surface of the substrate 221 including (e.g., formed of) the metal material (S231) may include forming the active material layer 223 in the central area of the substrate 221 so that one area on opposite ends of the substrate 221 may be exposed to the outside. As such, the ends on opposite sides of the substrate 221 where the active material layer 223 may not be formed become an area where electrode tabs may be formed through the forming of the first outer electrode portion 220a and the second outer electrode portion 220b by punching the first electrode plate 221a and the second electrode plate 221b (S234).

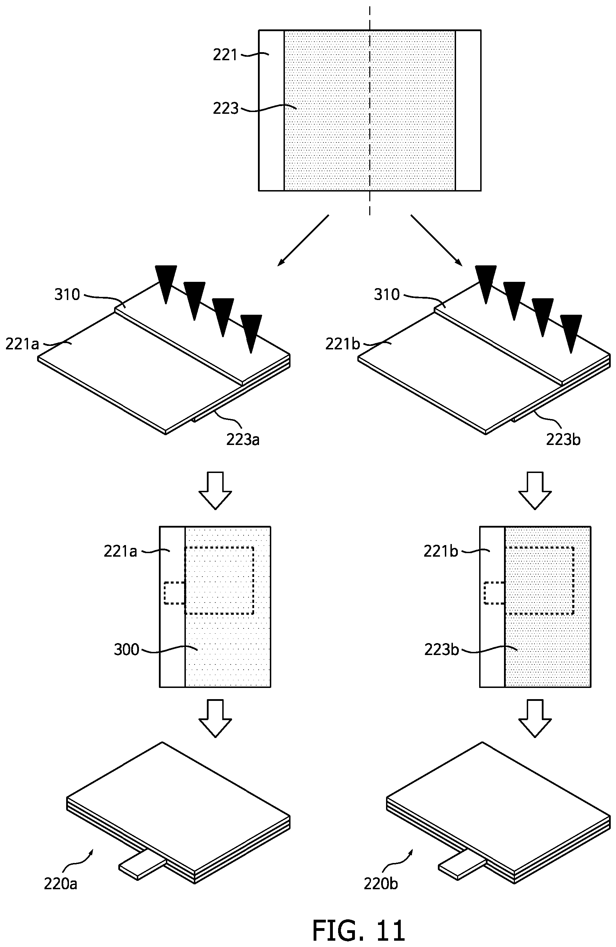

Referring to FIG. 11, the forming of the first electrode plate 221a and the second electrode plate 221b by cutting the electrode plate (S232) may include forming the first electrode plate 221a and the second electrode plate 221b by cutting the center of the electrode plate in a direction parallel to the ends on opposite sides of the electrode plate where the active material layer 223 may not be formed.

The forming of the insulating portion 300 in the area of the other surface of the first electrode plate 221a and the second electrode plate 221b corresponding to the area where the active material layer 223 may be formed (S233) may include forming the insulating portion 300 on the other surface of the first electrode plate 221a and the second electrode plate 221b, formed through the forming of the first electrode plate 221a and the second electrode plate 221b by cutting the electrode plate (S232), where the active material layer 223 may not be formed.

As illustrated in FIG. 11, the insulating portion 300 may be formed by applying an insulating material 310 to the other surface of the first electrode plate 221a and the second electrode plate 221b. At this time, the insulating portion 300 may be formed by applying the insulating material 310 to an area corresponding to the area where the active material layer 223 may be formed. The area of the first electrode plate 221a and the second electrode plate 221b where the active material layer 223 and the insulating portion 300 may not be formed may be an area where the electrode tab may be formed.

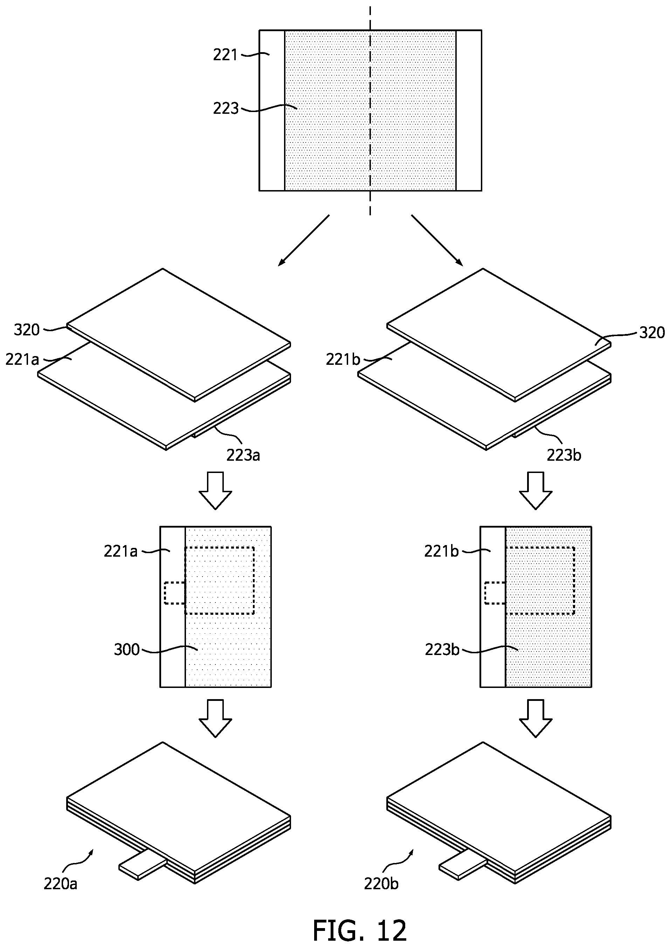

In one or more embodiments, as illustrated in FIG. 12, the insulating portion 300 may be formed by attaching an insulating film 320 including (e.g., formed of) an insulating material to the other surface of the first electrode plate 221a and the second electrode plate 221b. At this time, the insulating portion 300 may be formed by attaching the insulating film 320 only to an area corresponding to the area where the active material layer 223 may be formed. The area of the first electrode plate 221a and the second electrode plate 221b where the active material layer 223 and the insulating portion 300 may not be formed may be an area where the electrode tab may be formed.

The forming of the first outer electrode portion 220a and the second outer electrode portion 220b by punching the first electrode plate 221a and the second electrode plate 221b (S234) may include punching the first electrode plate 221a and the second electrode plate 221b so that electrode tabs may be formed in an area where the insulating portion 300 and the active material layer 223 may not be formed. This forming of the first outer electrode portion 220a and the second outer electrode portion 220b by punching the first electrode plate 221a and the second electrode plate 221b (S234)may be performed in the same manner as the forming of the first outer electrode portion 220a and the second outer electrode portion 220b by punching the first electrode plate 221a and the second electrode plate 221b (S214) of the forming of the outer electrode portion (S210) according to one or more embodiments described above with reference to FIG. 7.

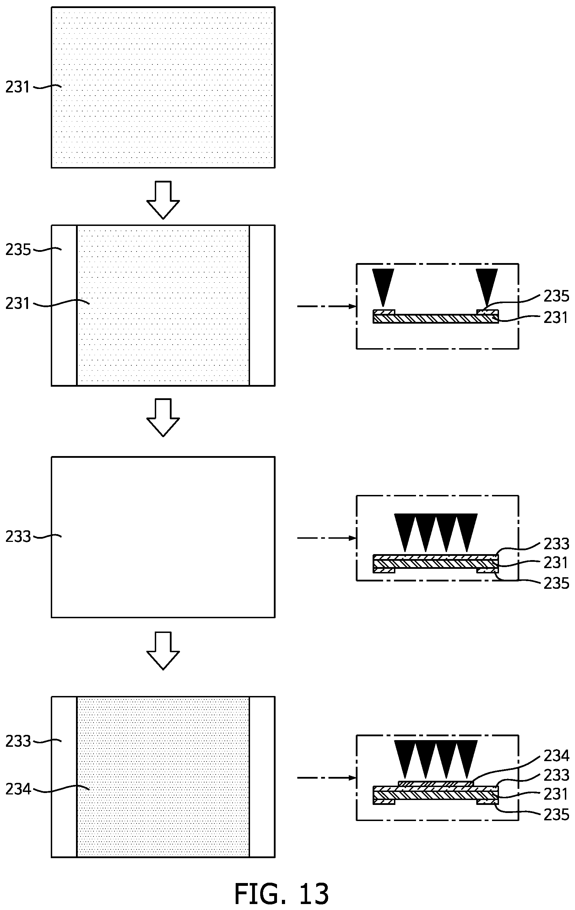

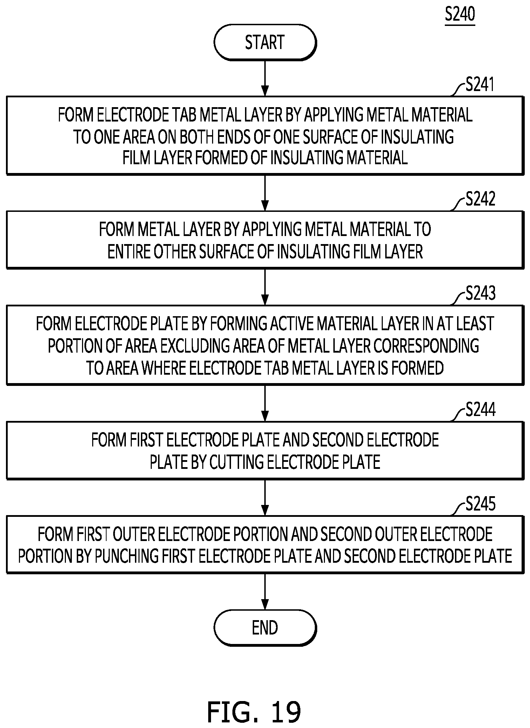

FIGS. 13 and 14 sequentially illustrate an example of forming an outer electrode portion according to one or more embodiments of the present disclosure, and FIG. 19 is a flowchart showing an example of a method of manufacturing the outer electrode portion according to one or more embodiments of the present disclosure. Referring to FIGS. 13, 14, and 19, forming an outer electrode portion (S240) according to one or more embodiments may include forming an electrode tab metal layer 233 by applying a metal material to one area on opposite ends of one surface of an insulating film layer 231 including (e.g., formed of) an insulating material (S241), forming a metal layer 233 by applying a metal material to the entire other surface of the insulating film layer 231 (S242), forming an electrode plate by forming an active material layer by applying an active material to at least a portion of an area excluding (e.g., not including) an area of the metal layer 233 corresponding to an area where the electrode tab metal layer 233 may be formed (S243), forming a first electrode plate 231a and a second electrode plate 231b by cutting the electrode plate (S244), and forming a first outer electrode portion 230a and a second outer electrode portion 230b by punching the first electrode plate 231a and the second electrode plate 231b (S245).

The forming of the electrode tab metal layer 233 by applying the metal material to one area on opposite ends of one surface of the insulating film layer 231 including (e.g., formed of) an insulating material (S241)may include applying a metal material to one area on opposite ends of one surface of the insulating film layer 231 so that a metal material may be applied to an area where the electrode tab may be formed in the insulating film layer 231 formed of the insulating material. An area on one surface of the insulating film layer 231 where the electrode tab metal layer 233 may not be formed may correspond to the insulating portion 300.

The forming of the metal layer 233 by applying the metal material to the entire other surface of the insulating film layer 231 (S242) may include forming the metal layer 233 by applying a metal material to the entire other surface of the insulating film layer 231. For example, the forming of the outer electrode portion (S240) according to one or more embodiments may include forming the metal layer 233 on the entire other surface of the insulating film layer 231 so as to be used as an electrode and coating an active material layer on the metal layer 233, because the insulating film layer 231 including (e.g., formed of) an insulating material rather than a metal material may be a base layer.

The forming of the electrode plate by forming the active material layer by applying the active material to at least the portion of the area excluding (e.g., not including) the area of the metal layer 233 corresponding to the area where the electrode tab metal layer 233 may be formed (S243)may include forming the electrode plate by applying an active material to at least a portion of an area excluding (e.g., not including) the area of the metal layer 233 corresponding to the area where the electrode tab metal layer 233 may be formed. The electrode tab metal layer 233 corresponds to the area where the electrode tab may be formed. Because an active material layer should not be formed on the electrode tab, the active material layer 223 may be formed in an area excluding (e.g., not including) the area corresponding to the area where the metal layer 233 may be formed.

Referring to FIG. 14, the forming of the first electrode plate 231a and the second electrode plate 231b by cutting the electrode plate (S244) may include forming the first electrode plate 231a and the second electrode plate 231b by cutting the center of the electrode plate in a direction parallel to the electrode tab metal layer 233 in the electrode plate.

The forming of the first outer electrode portion 230a and the second outer electrode portion 230b by punching the first electrode plate 231a and the second electrode plate 231b (S245) may include punching the first electrode plate 231a and the second electrode plate 231b so that electrode tabs may be formed in an area where the active material layer 223 may not be formed.

In the forming of the first outer electrode portion 230a and the second outer electrode portion 230b by punching the first electrode plate 231a and the second electrode plate 231b (S245), while the pair of outer electrode portions 230a and 230b may be stacked on the electrode assembly, the punching may be performed so that the electrode tab 232a of the first electrode plate 231a and the electrode tab 232b of the second electrode plate 231b formed during punching may be configured to face each other.

For example, referring to FIG. 14, the forming of the first outer electrode portion 230a and the second outer electrode portion 230b by punching the first electrode plate 231a and the second electrode plate 231b (S245)may include forming the first outer electrode portion 230a by punching the first electrode plate 231a with the surface on which the electrode tab metal layer 233 may be formed, and forming the second outer electrode portion 230b by punching the second electrode plate 231b with the surface on which the active material layer 234b may be formed. The forming of the first outer electrode portion 230a by punching the first electrode plate 231a with the surface on which the electrode tab metal layer 233 may be formed and the forming of the second outer electrode portion 230b by punching the second electrode plate 231b with the surface on which the active material layer 234b may be formed may be performed simultaneously, or the forming of the first outer electrode portion 230a by punching the first electrode plate 231a with the surface on which the electrode tab metal layer 233 may be formed may be performed after the forming of the second outer electrode portion 230b by punching the second electrode plate 231b with the surface on which the active material layer 234b may be formed.

In one or more embodiments, rather than performing the forming of the first outer electrode portion 230a by punching the first electrode plate 231a with the surface on which the electrode tab metal layer 233 may be formed and the forming of the second outer electrode portion 230b by punching the second electrode plate 231b with the surface on which the active material layer 234b may be formed separately, the first outer electrode portion 230a and the second outer electrode portion 230b may be manufactured simultaneously through single punching while the first electrode plate 231a and the second electrode plate 231b may be stacked. At this time, the insulating portion 300 of the first electrode plate 231a and the insulating portion 300 of the second electrode plate 231b may be punched while being stacked to face each other.

As such, the insulating portion 300 may be on the upper surface of the first metal layer 233a and the first active material layer 234a may be formed on the lower surface thereof, and thus, the first outer electrode portion 230a formed through the forming of the outer electrode portion (S240) according to one or more embodiments may be stacked on the upper surface of the center electrode portion. The second active material layer 234b may be formed on the upper surface of the second metal layer 233b and the insulating portion 300 may be formed on the lower surface thereof, and thus, the second outer electrode portion 230b may be stacked on the lower surface of the center electrode portion. At this time, the electrode tab 232a of the first outer electrode portion 230a and the electrode tab 232b of the second outer electrode portion 230b may face each other.

The electrode tab 232a of the first outer electrode portion 230a and the electrode tab 232b of the second outer electrode portion 230b may be respectively above and below the first electrode tab formed on the first electrode of the center electrode portion and may be electrically connected to the first electrode tab. In one or more embodiments, the electrode tab 232a of the first outer electrode portion 230a and the electrode tab 232b of the second outer electrode portion 230b may be above and below the second electrode tab formed on the second electrode and may be electrically connected to the second electrode tab.

Referring to FIG. 5, the method of manufacturing the secondary battery according to some embodiments may further include forming an auxiliary insulating portion by forming an auxiliary insulating portion 430 on the inner surface of at least one of the case body 410 or the case cover 420.

The forming of the auxiliary insulating portion may include forming the auxiliary insulating portion 430 by applying an insulating material to the inner surface of the case body 410 and the inner surface of the case cover 420, or may form the auxiliary insulating portion 430 by attaching an insulating film formed of an insulating material thereto. The auxiliary insulating portion 430 may include (e.g., may be formed of) an insulating material such as polymer, resin, rubber, and/or the like, which may be a high molecular weight compound through which electricity may not be transmitted.

In the present disclosure, the first active material, the second active material, and the active material may be a positive electrode active material or a negative electrode active material.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}O_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L1_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of (about) 90 wt% to (about) 99.5 wt% on the basis of 100 wt% of the positive electrode active material layer, and the content of the binder and the conductive material is in a range of (about) 0.5 wt% to (about) 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include (about) 90 wt % to (about) 99 wt % of a negative electrode active material, (about) 0.5 wt % to (about) 5 wt % of a binder, and (about) 0 wt % to (about) 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

## Claims

1. A secondary battery (100) comprising:
an electrode assembly (200) comprising a first electrode (211), a second electrode (213), and a separator (215);
a case (400) accommodating the electrode assembly (200); and
an insulating portion (300) disposed on an upper surface and a lower surface of the electrode assembly (200), the insulating portion (300) configured to insulate the case (400) and the electrode assembly (200) from each other.

2. The secondary battery (100) as claimed in claim 1, wherein the electrode assembly (200) comprises:
a center electrode portion (210) comprising stacked first electrodes (211), separators (215), and second electrodes (213) with one of the separators (215) stacked between one of the first electrodes and one of the second electrodes; and
a pair of outer electrode portions (220, 220a, 220b, 230a, 230b) on an upper surface and a lower surface of the center electrode portion (210),
wherein the insulating portion (300) is disposed on a surface of the outer electrode portion (220) facing away from the center electrode portion (210).

3. The secondary battery (100) as claimed in claim 2, wherein the outer electrode portion (220) comprises:
a substrate (221,221a, 221b) including an electrode tab (222, 222a, 222b) protruding outward from one side of the substrate; and
an active material layer (223) disposed on at least a portion of an area excluding the electrode tab (222a, 222b) on a first surface of the substrate (221),
wherein the insulating portion (300) is disposed on at least a portion of the area excluding the electrode tab (222a, 222b, 232a, 232b) on a second surface of the substrate (221) opposite to the first surface.

4. The secondary battery (100) as claimed in claim 2, wherein the outer electrode portion (220) comprises:
a metal layer (233, 233a, 233b) comprising an electrode tab (232a, 232b) protruding outward from one side;
an insulating film layer (231) disposed on an entire portion of a first surface of the metal layer (233, 233a, 233b) and the electrode tab (232a, 232b), and including an insulating material (310);
an active material layer (234a, 234b) disposed on a second surface of the metal layer (233, 233a, 233b) opposite to the first surface; and
an electrode tab metal layer (235a, 235b) on an area of the other surface of the insulating film layer (231) corresponding to the electrode tab (232a, 232b),
wherein an area of the other surface of the insulating film layer (231) where the electrode tab metal layer (235a, 235b) is not located is the insulating portion (300).

5. The secondary battery (100) as claimed in one of the preceding claims, wherein the case (400) comprises:
a case body (410) including an opening at one side and configured to accommodate the electrode assembly (200); and
a case cover (420) coupled to the one side of the case body (410),
wherein the secondary battery (100) further comprises an auxiliary insulating portion (430) on an inner surface of at least one of the case body (410) or the case cover (420).

6. A method of manufacturing a secondary battery (100), the method comprising:
forming a center electrode portion (210) by alternately stacking first electrodes (211) and second electrodes (213) with one of a plurality of separators (215) stacked between one of the first electrodes and one of the second electrodes;
forming a pair of outer electrode portions (220a, 220b, 230a, 230b) each including an insulating portion (300);
stacking one of the pair of outer electrode portions (220a, 230a) on an upper surface of the center electrode portion (210) and one of the pair of outer electrode portions (220b,230b) on a lower surface of the center electrode portion (210) to form an electrode assembly (200), wherein each of the insulating portions (300) is disposed on a surface of the outer electrode portion (220) facing away from the center electrode portion (210); and
accommodating the electrode assembly (200) in a case (400).

7. The method as claimed in claim 6, wherein the forming of the pair of outer electrode portions (220a, 220b, 230a, 230b) including the insulating portion (300) comprises:
forming the insulating portion (300) by applying an insulating material (310) to one surface of a substrate (221) with the substrate comprising a metal material, or forming the insulating portion (300) by attaching an insulating film (320) to one surface of a substrate (221);
forming an electrode plate by forming an active material layer (223, 234a, 234b) in an area of the other surface of the substrate (221) corresponding to an area where the insulating portion (300) is formed;
forming a first electrode plate and a second electrode plate by cutting the electrode plate; and
forming a first outer electrode portion (220a, 230a) and a second outer electrode portion (220b, 230b) by punching the first electrode plate and the second electrode plate.

8. The method as claimed in claim 7, wherein the forming of the first outer electrode portion (220a, 230a) and the second outer electrode portion (220b, 230b) comprises punching the first electrode plate and the second electrode plate such that electrode tabs (222a, 222b, 232a, 232b) are formed in an area where the insulating portion (300) and the active material layer (223, 234a, 234b) are not formed.

9. The method as claimed in claim 7, wherein the forming of the first outer electrode portion (220a, 230a) and the second outer electrode portion (220b, 230b) comprises:
forming a first outer electrode portion (220a, 230a) by punching the first electrode plate with a surface on which the insulating portion (300) is formed; and
forming a second outer electrode portion (220b, 230b) by punching the second electrode plate with a surface on which the active material layer (223, 234a, 234b) is formed.

10. The method as claimed in claim 6, wherein the forming of the pair of outer electrode portions (220a, 220b, 230a, 230b) including the insulating portion (300) comprises:
forming an electrode plate by forming an active material layer (223, 234a, 234b) on one surface of a substrate (221) with the substrate (221) formed of a metal material;
forming a first electrode plate and a second electrode plate by cutting the electrode plate;
forming a first outer electrode portion (220a, 230a) and a second outer electrode portion (220b, 230b) by punching the first electrode plate and the second electrode plate; and
forming the insulating portion (300) by applying an insulating material (310) or by attaching an insulating film (320) to one surface of the first outer electrode portion (220a, 230a) and the second outer electrode portion (220b, 230b) where the active material layer (223, 234a, 234b) is not formed.

11. The method as claimed in claim 10, wherein the forming of the first outer electrode portion (220a, 230a) and the second outer electrode portion (220b, 230b) comprises:
forming a first outer electrode portion (220a, 230a) by punching the first electrode plate with a surface on which the active material layer (223, 234a, 234b) is not formed; and
forming a second outer electrode portion (220b, 230b) by punching the second electrode plate with a surface on which the active material layer (223, 234a, 234b) is formed.

12. The method as claimed in claim 6, wherein the forming of the pair of outer electrode portions (220a, 220b, 230a, 230b) including the insulating portion (300) comprises:
forming an electrode plate by forming an active material layer (223, 234a, 234b) on one surface of a substrate (221) with the substrate (221) comprising a metal material;
forming a first electrode plate and a second electrode plate by cutting the electrode plate;
forming the insulating portion (300) by applying an insulating material (310) to an area of the other surface of the first electrode plate and the second electrode plate corresponding to an area where the active material layer (223, 234a, 234b) is formed or attaching an insulating film (320) thereto; and
forming a first outer electrode portion (220a, 230a) and a second outer electrode portion (220b, 230b) by punching the first electrode plate and the second electrode plate.

13. The method as claimed in claim 6, wherein the forming of the pair of outer electrode portions (220a, 220b, 230a, 230b) having the insulating portion (300) comprises:
forming an electrode tab metal layer (235a, 235b) by applying a metal material to one area on opposite ends of one surface of an insulating film layer (231) with the insulating film layer (231) comprising an insulating material (310);
forming a metal layer (233, 233a, 233b) by applying a metal material to the entire other surface of the insulating film layer (231);
forming an electrode plate by forming an active material layer (223, 234a, 234b) by applying an active material to at least a portion of an area excluding an area of the metal layer (233, 233a, 233b) corresponding to an area where the electrode tab metal layer (235a, 235b) is formed;
forming a first electrode plate and a second electrode plate by cutting the electrode plate; and
forming a first outer electrode portion (220a, 230a) and a second outer electrode portion (220b, 230b) by punching the first electrode plate and the second electrode plate.

14. The method as claimed in claim 13, wherein the forming of the first outer electrode portion (220a, 230a) and the second outer electrode portion (220b, 230b) comprises:
forming a first outer electrode portion (220a, 230a) by punching the first electrode plate with a surface on which the electrode tab metal layer (235a, 235b) is formed; and
forming a second outer electrode portion (220b, 230b) by punching the second electrode plate with a surface on which the active material layer (223, 234a, 234b) is formed.

15. The method as claimed in one of claims 6 to 14, wherein the method further comprises providing the case (400), the case (400) comprising:
a case body (410) having an opening at one side and accommodating the electrode assembly (200); and
a case cover (420) coupled to the one side of the case body (410) including the opening; and
forming an auxiliary insulating portion (430) on an inner surface of at least one of the case body (410) or the case cover (420).
